# EUROPÄISCHE PATENTSCHRIFT

(11) **EP 1 297 190 B1**
(45) Veröffentlichungstag und Bekanntmachung des Hinweises auf die Patenterteilung: **06.08.2008**
(21) Anmeldenummer: 01944722.6
(22) Anmeldetag: 27.06.2001
(51) Int. Cl.: C21B 13/00, C21B 13/14

(54) **VERFAHREN UND ANLAGE ZUR GASREDUKTION VON TEILCHENFÖRMIGEN OXIDHÄLTIGEN ERZEN**
METHOD AND INSTALLATION FOR THE INDIRECT REDUCTION OF PARTICULATE OXIDE-CONTAINING ORES
PROCEDE ET INSTALLATION POUR LA REDUCTION INDIRECTE DE MINERAIS EN PARTICULES CONTENANT DES OXYDES

(30) Priorität: 28.06.2000 AT 11102000
(43) Veröffentlichungstag der Anmeldung: 02.04.2003
(73) Patentinhaber: Siemens VAI Metals Technologies GmbH & Co, 4031 Linz (AT); Posco, Pohang-shi, Kyungsangbuk-do 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: KEPPLINGER, Leopold, Werner, A-4060 Leonding (AT); HAUZENBERGER, Franz, A-4030 Linz (AT); SCHENK, Johannes, A-4040 Linz (AT); JOO, Sanghoon, Pohang City 790-758, Kyungbuk (KR)
(74) Vertreter: Maier, Daniel Oliver
(86) Internationale Anmeldenummer: PCT/AT2001/000209
(87) Internationale Veröffentlichungsnummer: WO 2002/000945

(56) Entgegenhaltungen:
- WO-A-81/02057
- AT-B- 402 937
- DE-A- 10 030 550
- US-A- 5 545 251
- US-A- 5 584 910

## Beschreibung

Die Erfindung betrifft ein Verfahren zur Gasreduktion von teilchenförmigen oxidhältigen Erzen, insbesondere von eisenoxidhältigem Material, im Wirbelschichtverfahren bei einem Druck ≤ 5 bar, wobei das Erz mit Hilfe eines aus Kohle erzeugten Reduktionsgases in einem als Vorwärmstufe ausgebildeten Wirbelschichtreaktor erhitzt, gegebenenfalls auch vorreduziert wird, anschließend in mindestens einem als Reduktionsstufe ausgebildeten Wirbelschichtreaktor zu Eisenschwamm reduziert wird, wobei das Reduktionsgas über eine Reduktionsgas-Zuleitung bzw. Reduktionsgasleitung in Gegenrichtung des von Stufe zu Stufe geleiteten zu reduzierenden Materials von der Reduktionsstufe zur Vorwärmstufe geleitet wird und nach Reinigung als Exportgas abgezogen wird, sowie eine Anlage zur Durchführung des Verfahrens.

Findet die Reduktion des teilchenförmigen oxidhältigen Erzes in mehreren hintereinandergeschalteten Wirbelschichtreaktoren statt, wobei das Reduktionsgas im Gegenstrom zum Erz von einem Reaktor zum anderen geleitet wird, kommt es zu einer schrittweisen Erwärmung des Feststoffs bei gleichzeitiger Enthalpieabnahme des Reduktionsgases, teilweise bedingt auch durch die ablaufenden Reaktionen bei der Reduktion. Dies kann unter Umständen in den einzelnen Reduktionsstufen für den Feststoff zu solch geringen Temperaturen führen, daß die Reaktion zwischen Reduktionsgas und oxidhältigem Erz kinetisch und thermodynamisch behindert wird, d.h. die Reduktion des Erzes nicht bis zum gewünschten Grad während seines zeitlichen Aufenthalts im Reduktionsreaktor erfolgt.

Bei einem aus der AT 402 937 B bekannten Verfahren der eingangs genannten Art wird eisenoxidhältiges Material in vier in Serie hintereinandergeschalteten Wirbelschicht-Reduktionszonen reduziert. Um in allen Wirbelschicht-Reduktionszonen eine etwa gleich hohe konstante Temperatur einzustellen, wird frisch gebildetes Reduktionsgas zum Teil den der in Reduktionsgas-Strömungsrichtung ersten Wirbelschicht-Reduktionszone folgenden Wirbelschicht-Reduktionszonen zusätzlich zu dem die Wirbelschicht-Reduktionszonen in Serie durchströmenden Reduktionsgas direkt zugeführt, so daß die Wirbelschicht-Reduktionszonen hinsichtlich der Reduktionsgasführung sowohl in Serie als auch parallel geschaltet sind. Das zusätzlich zugeführte, frisch gebildete Reduktionsgas wird den einzelnen Wirbelschicht-Reduktionszonen hierbei vorzugsweise in einer Menge von 5 bis 15% zugeführt.

Nachteilig hierbei ist jedoch, daß die Vorreduktionsstufen bis zur Vorwärmstufe hin für immer größer werdende Gasmengen ausgelegt sein müssen, da in jeder der Endreduktionsstufe folgenden Stufe zu dem die vorgeschaltete Stufe verlassenden Reduktionsgas zusätzliches frisches Reduktionsgas hinzukommt. Geht man weiters davon aus, daß in der Endreduktionszone eine bestimmte Menge an Reduktionsgas zur vollständigen Reduktion des eingesetzten Materials jedenfalls benötigt wird, unabhängig davon ob eine zusätzliche Parallelführung des Reduktionsgases vorliegt oder nicht, ergibt sich bei einer Anordnung gemäß der AT 402 937 B insgesamt ein höherer Reduktionsgasverbrauch.

In der WO 97/13880 A und der WO 97/13878 A ist ein Verfahren beschrieben, bei dem ein Teil eines aus einer Endreduktionsstufe in eine Vorreduktionsstufe strömenden Reduktionsgases abgezweigt, gewaschen, von CO₂ gereinigt sowie aufgeheizt und anschließend in die Endreduktionsstufe rückgeführt wird. In der Vorwärmstufe wird Sauerstoff mit einem Teil des in diese Stufe eingeleiteten Reduktionsgases zur Erhöhung seiner Temperatur verbrannt.

Gemäß der WO 97/13880 A und der WO 97/13878 A werden nur die Temperaturen in den der Endreduktionsstufe und der Vorwärmstufe zugeordneten Wirbelschichtreaktoren über eine Gasrückführung bzw. Teilverbrennung gesteuert. Die zwischen diesen beiden Stufen liegenden Reaktoren sind dagegen von den Bedingungen im Endreduktions-Wirbelschichtreaktor abhängig.

Aus der JP 58-34114 A ist ein Verfahren zur Reduktion von feinkörnigem Eisenerz bekannt, bei dem das Reduktionsgas für die Endreduktionsstufe durch Zersetzung und Reformierung von Kohlenwasserstoff mittels des aus der Endreduktionszone abgezogenen oxidierenden Abgases erzeugt wird, wobei das Eisenerz in einer ersten Stufe durch aus dem Kohlenwasserstoff abgeschiedenen Kohlenstoff vorreduziert wird. Zur Bereitstellung der für die Erzeugung des Reduktionsgases benötigten Energie wird das oxidierende Abgas erhitzt, bevor es mit dem Kohlenwasserstoff in Kontakt gebracht wird.

In der US 3,985,547 A ist ein Verfahren zur Eisenerzreduktion in einem Mehrfachwirbelbettreaktor beschrieben, bei dem frisches Reduktionsgas durch unterstöchiometrische Verbrennung von Methan und Sauerstoff in einem dem Reaktor zugeordneten Brenner erzeugt wird, der mit seiner Auslassöffnung zwischen dem untersten und dem darüber gelegenen Wirbelbett angeordnet ist. Das aus dem obersten Wirbelbett austretende verbrauchte Reduktionsgas wird gereinigt, von Wasser und CO₂ befreit und im erhitzten Zustand dem untersten Wirbelbett als Recycling-Reduktionsgas zugeführt.

In der US5584910 ist ein Verfahren zur Reduktion von feinkörnigem Eisenerz beschrieben, bei zur Anhebung der Reduktionsgastemperatur das Reduktionsgas selbst zum Teil verbrannt wird.

Die Erfindung stellt sich die Aufgabe, bei einem Verfahren der eingangs beschriebenen Art eine Möglichkeit zur unabhängigen Temperaturerhöhung in den einzelnen Reduktionsstufen zu schaffen, ohne daß die Menge an Reduktionsgas wesentlich erhöht werden muss oder eine vergrößerte Dimensionierung von Anlageteilen notwendig ist. Ziel ist die Einstellung der Temperatur in jeder einzelnen Wirbelschicht-Reduktionsstufe und die Einstellung eines optimalen Feststoff-/Gastemperaturprofils sowie Gasqualitätsprofils über den Wirbelschichtstufen.

Diese Aufgabe wird erfindungsgemäß dadurch gelöst, dass dem der Reduktionsstufe und/oder Vorwärmstufe zugeführten Reduktionsgas Wärme zugeführt wird, und zwar durch Verbrennung eines Teils desExportgases aus der Vorwärmstufe in einem in der Reduktionsgas-Zuleitung (12) bzw. Reduktionsgasleitung (13) vorgesehenen Brenner (25), oder durch Verbrennung eines Teils des Exportgases aus der Vorwärmstufe (5) in einer von der Reduktionsgas-Zuleitung (12) bzw. Reduktionsgasleitung (13) separaten Brennkammer (25a) mit anschliessender Einleitung der Verbrennungsgase und gegebenenfalls nicht verbrannter Feststoffe in die Reduktionsgas-Zuleitung (12) bzw. Reduktionsgasleitung (13), oder durch Verbrennung eines Teils des Exportgases aus der Vorwärmstufe (5) mittels mindestens eines dem Wirbelschichtreaktor (30) zugeordneten Brenners (38), wobei die Verbrennungsgase direkt in den Wirbelschichtreaktor (30) eingeleitet werden, zusammen mit Sauerstoff und/oder Luft.

Eine weitere Möglichkeit zur Lösung der erfindungsgemäßen Aufgabe besteht darin, dass dem der Reduktionsstufe bzw. Vorwärmstufe zugeführten Reduktionsgas Wärme zugeführt wird, und zwar durch Verbrennung des aus der Gasrückführleitung (22) mittels Kühlgasleitung (28) abgezweigten und über Verdichter (29) parallel zu den Brennern (25, 25', 25") transportierten Teils des Kühlgases in einem in der Reduktionsgas-Zuleitung (12) bzw. Reduktionsgasleitung (13) vorgesehenen Brenner (25), oder durch Verbrennung eines Teils des Kühlgases in einer von der Reduktionsgas-Zuleitung (12) bzw. Reduktionsgasleitung (13) separaten Brennkammer (25a) mit anschliessender Einleitung der Verbrennungsgase und gegebenenfalls nicht verbrannter Feststoffe in die Reduktionsgas-Zuleitung (12) bzw. Reduktionsgasleitung (13), oder durch Verbrennung eines Teils des Kühlgases mittels mindestens eines dem Wirbelschichtreaktor (30) zugeordneten Brenners (38), wobei die Verbrennungsgase direkt in den Wirbelschichtreaktor (30) eingeleitet werden, zusammen mit Sauerstoff und/oder Luft.

Eine Sauerstoffzugabe zum Reduktionsgas ermöglicht eine individuelle Energieverteilung zu den einzelnen Reaktoren, so dass zum Beispiel bei drei Wirbelschichtreaktoren die Eintrittstemperatur des Reduktionsgases bei Sauerstoff-/Luftzugabe zu allen drei Reaktoren wie folgt aussehen könnte: 920°C (1. Reaktor)/890°C (2.Reaktor)/900°C (3. Reaktor). Würde eine Sauerstoff-/Luftzugabe nur vor dem der Vorwärmstufe (3. Reaktor) und der Endreduktionsstufe(1. Reaktor) zugeordneten Wirbelschichtreaktor erfolgen, müssten sich die Eintrittstemperaturen, um das gleiche Reduktionsergebnis zu erzielen, auf 920°C/750°C/1140°C ändern, was zu einer erhöhten thermischen Belastung des Reaktors 3 und des in Reaktor. 3 chargierten Erzes führen würde. Dieses Problem wird durch ein erfindungsgemäßes Verfahren vermieden.

Durch Erhöhung der Reduktionsgastemperatur gemäß der Erfindung werden Autoreforming-Reaktionen in der Gasphase thermodynamisch sowie kinetisch bevorzugt, wobei gegebenenfalls der im Reduktionsgas vorhandene Staub als Katalysator wirkt. Bei diesen Autoreforming-Reaktionen kommt es zu einer Umsetzung von Methan mit Kohlendioxid bzw. Wasserdampf zu Kohlenmonoxid bzw. Wasserstoff. Aufgrund dieser in-situ Generierung reduzierender Bestandteile wird die Reduktionsgasanalyse und somit auch thermodynamisch die Erzreduktion verbessert.

Vorzugsweise wird der zu verbrennende Teil des Exportgases oder des Kühlgases vor der Verbrennung einem Waschvorgang unterzogen, wodurch durch Verbrennung von staubbeladenen Gasen entstehende lokal sehr hohe Temperaturen, die zu einem Schmelzen des Staubes durch Boudouard-Reaktion führen können, vermieden werden.

Der zur Verbrennung des Reduktionsgases notwendige Sauerstoff bzw. die Luft wird vorteilhaft über Lanzen, die gleichzeitig als Brenner fungieren, in die Reduktionsgas Zuleitung bzw. Reduktionsgasleitung, die das Reduktionsgas in die erste bzw. von einer Wirbelschicht-Reduktionszone in die nachgeschaltete Reduktionszone transportiert, zugeführt. Durch diese Anordnung wird der apparative Aufwand sehr gering gehalten.

Eine andere Möglichkeit zur Einstellung der Temperatur in den Reduktions-Wirbelschichtstufen besteht darin, dass dem Reduktionsgas durch Verbrennung von externem Brenngas und/oder festen und/oder flüssigen Brennstoffen zusammen mit Sauerstoff und/oder Luft Wärme zugeführt wird, wobei die Wärmezufuhr erfolgt durch Verbrennung von externem Brenngas und/oder festem und/oder flüssigem Brennstoff in einem in der Reduktionsgas-Zuleitung (12) bzw. Reduktionsgasleitung (13) vorgesehenen Brenner (25), oder durch Verbrennung von externem Brenngas und/oder festem und/oder flüssigem Brennstoff in einer von der Reduktionsgas-Zuleitung (12) bzw. Reduktionsgasleitung (13) separaten Brennkammer (25a) mit anschliessender Einleitung der Verbrennungsgase und gegebenenfalls nicht verbrannter Feststoffe in die Reduktionsgas-Zuleitung (12) bzw. Reduktionsgasleitung (13), oder durch Verbrennung von externem Brenngas und/oder festem und/oder flüssigem Brennstoff mittels mindestens eines dem Wirbelschichtreaktor (30) zugeordneten Brenners (38), wobei die Verbrennungsgase direkt in den Wirbelschichtreaktor (30) eingeleitet werden, zusammen mit Sauerstoff und/oder Luft.

Gemäß einer bevorzugten Ausführungsform erfolgt die Verbrennung der Brenngase oder der festen und/oder flüssigen Brennstoffe in einem in der Reduktionsgas-Zuleitung bzw. Reduktionsgasleitung vorgesehenen Brenner. Zweckmäßig kann die Leitung in diesem Bereich eine Verdickung aufweisen.

Gemäß einer weiteren bevorzugten Ausführungsform erfolgt die Verbrennung von Brenngas oder festem und/oder flüssigem Brennstoff in einer von der Reduktionsgas-Zuleitung bzw. Reduktionsgasleitung separaten Brennkammer, wobei die Verbrennungsgase und gegebenenfalls nicht verbrannte Feststoffe anschließend in die Reduktionsgas-Zuleitung bzw. Reduktionsgasleitung eingeleitet werden. Dadurch werden möglicherweise auftretende heiße Flammenfronten vergleichmäßigt, bevor sie mit staubbeladenem Reduktionsgas in Kontakt kommen und ebenfalls ein Anschmelzen des Staubes in den Leitungen verursachen.

Vorteilhaft wird Brenngas oder fester und/oder flüssiger Brennstoff zusammen mit Sauerstoff und/oder Luft mittels mindestens eines Brenners verbrannt, der im Reduktions-Wirbelschichtreaktor vorgesehen ist. Hierbei werden die Verbrennungsgase direkt in den Wirbelschichtreaktor eingeleitet.

Gemäß einer weiteren vorteilhaften Ausführungsform wird nur Sauerstoff und/oder Luft über einen Brenner, vorzugsweise Lanze, in den Wirbelschichtreaktor zugeführt und das Reduktionsgas dort direkt verbrannt.

Hierbei kann der Brenner zweckmäßig entweder unterhalb des im Wirbelschichtreaktor gebildeten Wirbelbetts, in Höhe des Wirbelbetts oder oberhalb desselben angeordnet sein, wodurch dem Reduktionsgas die Wärme äußerst gezielt und besonders effizient zugeführt werden kann.

Die beiden letztgenannten Alternativen sind besonders vorteilhaft, da hierbei die thermische Belastung des Verteilerbodens geringer ist und Fouling von Feststoff an bzw. in Düsen oder Öffnungen des Verteilerbodens verhindert oder zumindest verringert wird.

Gemäß einer bevorzugten Ausführungsform des erfindungsgemäßen Verfahrens werden für die Verbrennung ergänzend Exportgas und/oder Kühlgas und/oder externes Brenngas und/oder fester und/oder flüssiger und/oder gasförmiger Brennstoff auf Kohlenwasserstoffbasis eingesetzt. Diese Ausführungsform erweist sich als besonders vorteilhaft, wenn irgendein Brennstoff aus der oben angeführten Gruppe im Überfluß vorhanden ist oder Exportgas bzw. Kühlgas zum überwiegenden Teil für andere Zwecke benötigt wird und dadurch nicht in ausreichender Menge zur Verfügung steht.

Dem der Reduktionsstufe und/oder Vorwärmstufe zugeführten Reduktionsgas wird vorteilhaft ein durch zumindest teilweises Umsetzen mit dem Reduktionsgas den Reduktandenanteil des Reduktionsgases erhöhender Stoff, insbesondere Erdgas und/oder Kohle, zugemischt. Hierdurch wird das den Reduktionsprozeß behindernde Phänomen des"sticking"vermieden. Die Ursache dafür sind gerichtete, nadelige Eisenausscheidungen an der Oberfläche der Feinerzpartikel, die bei höheren Temperaturen und niedrigem Reduktionspotential entstehen. Die Umsetzung der Stoffe kann auch in einem Brenner erfolgen.

Die Zuführung zusätzlicher Brennstoffe ermöglicht eine positive Beeinflussung der Temperatureinstellung, des Oxidationsgrades des Reduktionsgases und gegebenenfalls eine Erhöhung der Gesamtgasmenge.

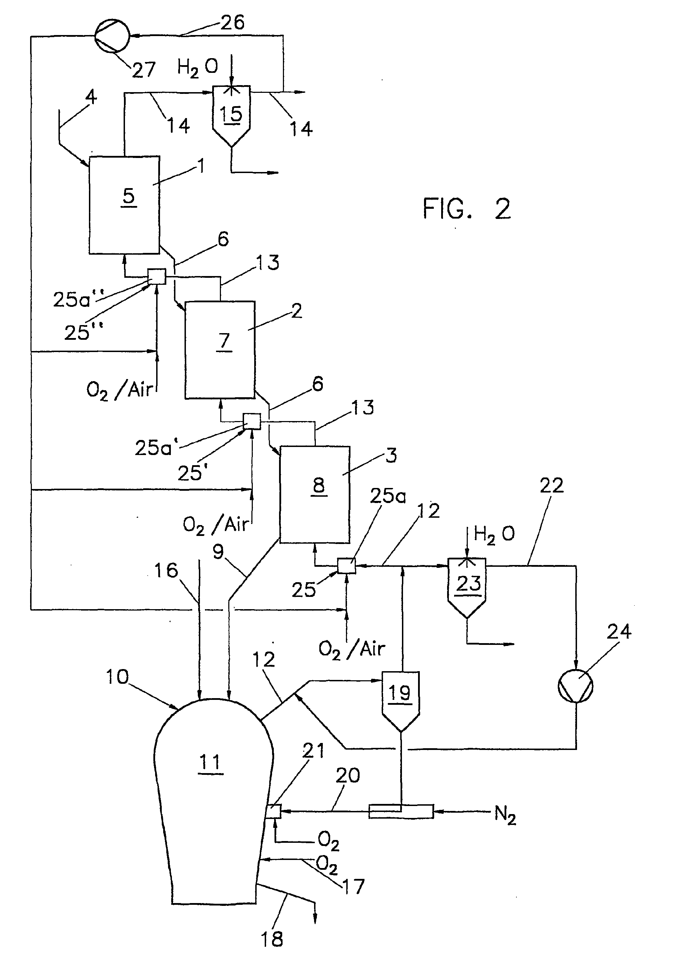

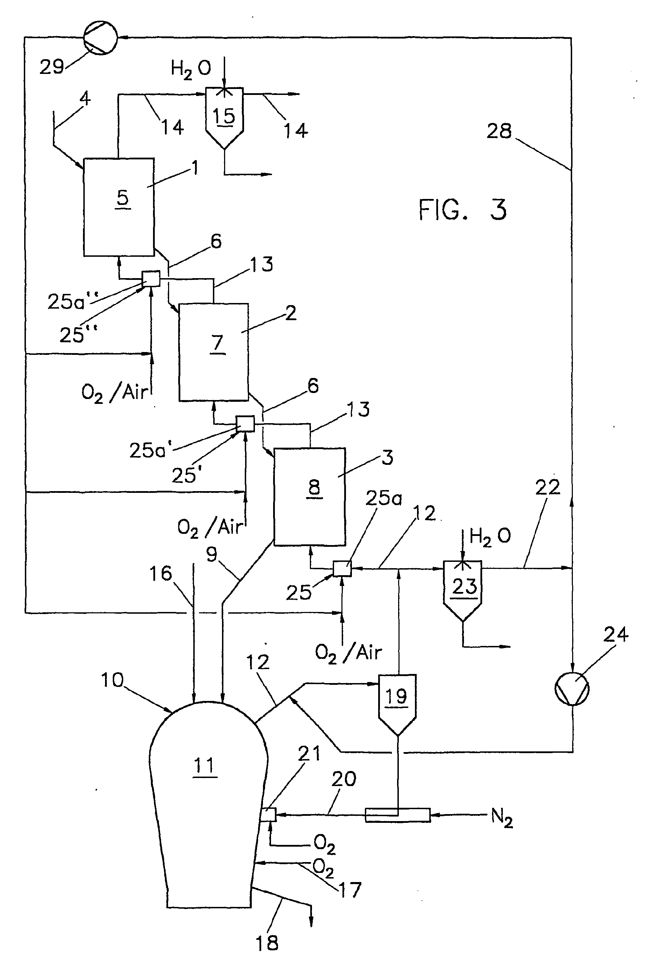

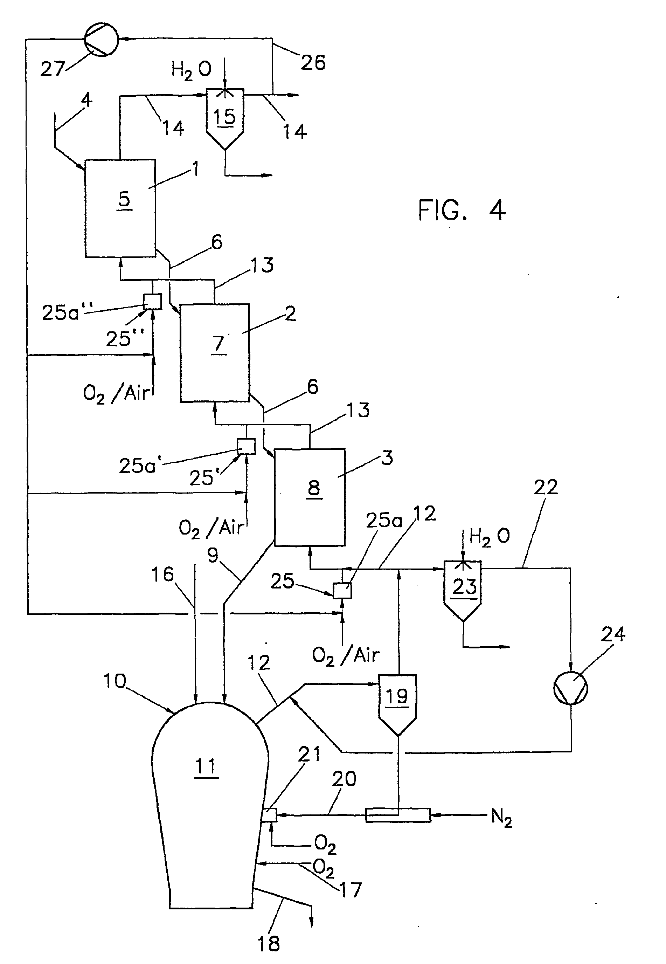

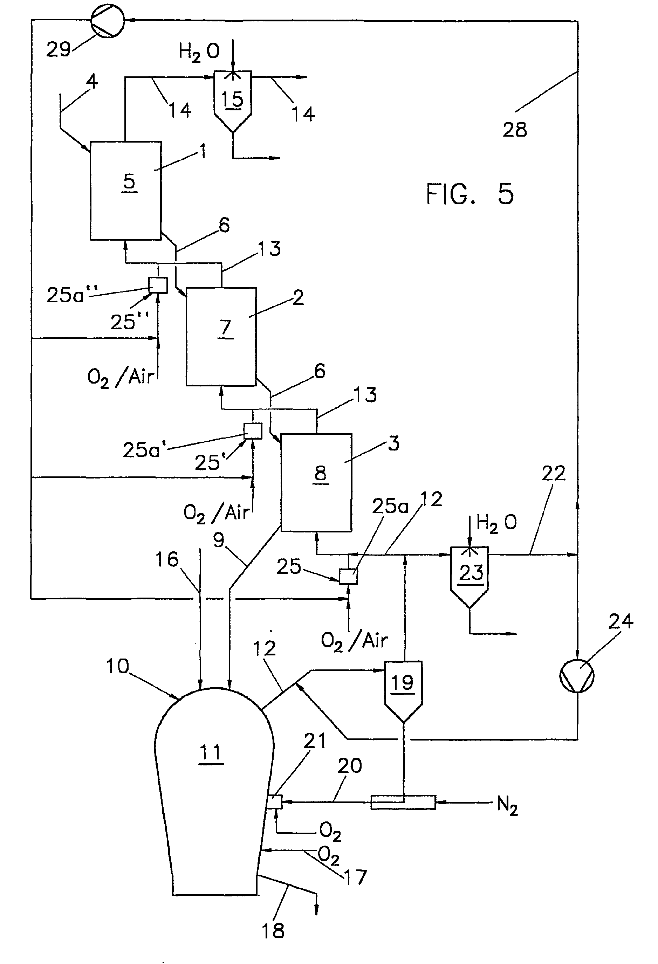

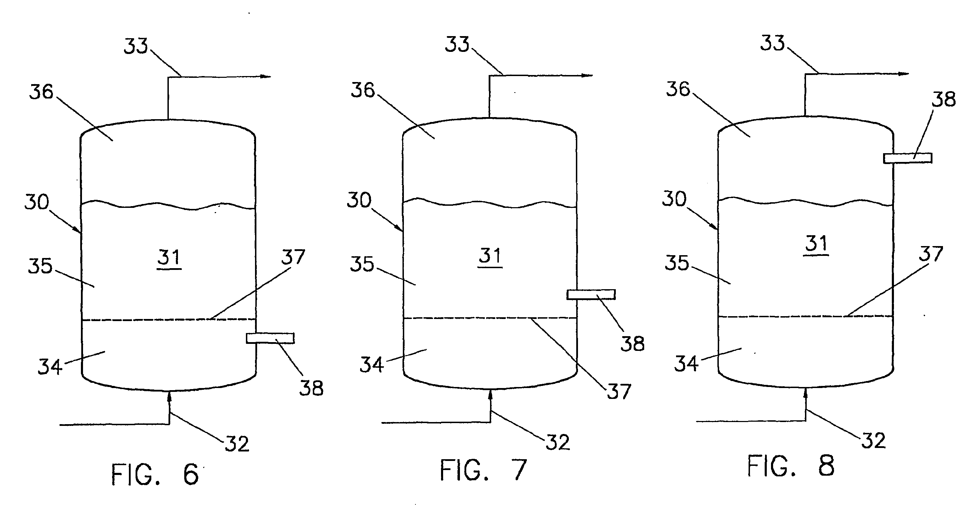

Die Erfindung ist nachfolgend anhand der Zeichnung näher erläutert, wobei die Fig. 2 und 3 sowie 9 je eine Ausführungsform eines erfindungsgemäßen Verfahrens im Blockschema, die Fig.4 und 5 jeweils eine bevorzugte Ausführungsform der in Fig. 2 bzw. 3 dargestellten Verfahren im Blockschema und die Fig. 6 bis 8 ein vergrößertes Detail einer bevorzugten Ausführungsform in schematischer Darstellung zeigen.

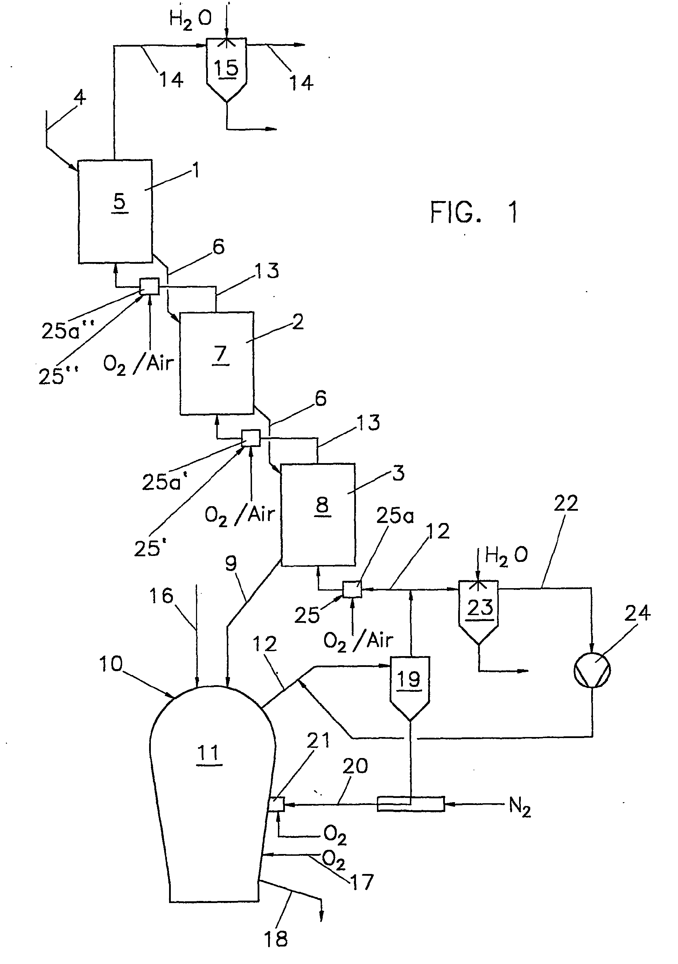

Fig. 1 zeigt drei in Serie hintereinandergeschaltete Wirbelschichtreaktoren 1 bis 3, wobei eisenoxidhältiges Material, wie Feinerz, über eine Erzzuleitung 4 dem ersten Wirbelschichtreaktor 1, in dem in einer Vorwärmstufe 5 eine Vorerwärmung des Feinerzes und eventuell eine Vorreduktion stattfindet, zugeleitet und anschließend von Wirbelschichtreaktor 1 zu Wirbelschichtreaktor 2, 3 über Förderleitungen 6 geleitet wird. Im Wirbelschichtreaktor 2 erfolgt in einer Vorreduktionsstufe 7 eine Vorreduktion und im Wirbelschichtreaktor 3 in einer Endreduktionsstufe 8 eine Endreduktion des Feinerzes zu Eisenschwamm.

Das fertig reduzierte Material, also der Eisenschwamm, wird über eine Förderleitung 9 in einen Einschmelzvergaser 10 geleitet. Im Einschmelzvergaser 10 wird in einer Einschmelzvergasungszone 11 aus Kohle und sauerstoffhältigem Gas ein CO- und H₂-hältiges Reduktionsgas erzeugt, das über die Reduktionsgas-Zuleitung 12 in den in Fließrichtung des Feinerzes letztangeordneten Wirbelschichtreaktor 3 eingeleitet wird. Das Wirbelschichtverfahren wird bei einem Druck von ≤ 5 bar durchgeführt. Das Reduktionsgas wird im Gegenstrom zum Erzdurchfluß von Wirbelschichtreaktor 3 zu Wirbelschichtreaktor 2 bis 1 geführt, und zwar über die Reduktionsgasleitungen 13, aus dem Wirbelschichtreaktor 1 als Exportgas über eine Exportgas-Ableitung 14 abgeleitet und anschließend in einem Naßwäscher 15 gekühlt und gewaschen.

Der Einschmelzvergaser 10 weist eine Zuführung 16 für feste Kohlenstoffträger, eine Zuführung 17 für sauerstoffhältige Gase sowie gegebenenfalls Zuführungen für bei Räumtemperatur flüssige oder gasförmige Kohlenstoffträger, wie Kohlenwasserstoffe, sowie für gebrannte Zuschläge auf. Im Einschmelzvergaser 10 sammeln sich unterhalb der Einschmelzvergasungszone 11 schmelzflüssiges Roheisen bzw. schmelzflüssiges Stahlvormaterial und schmelzflüssige Schlacke, die über einen Abstich 18 abgestochen werden.

In der Reduktionsgas-Zuleitung 12, die vom Einschmelzvergaser 10 ausgeht und in den Wirbelschichtreaktor 3 mündet, ist eine Entstaubungseinrichtung 19, wie ein Heißgaszyklon, vorgesehen, wobei die in diesem Zyklon abgeschiedenen Staubteile dem Einschmelzvergaser 10. über die Rückleitung 20 mit Stickstoff als Fördermittel und über einen Brenner 21 unter Einblasen von Sauerstoff zugeführt werden.

Von der Reduktionsgas-Zuleitung 12 geht eine Gasrückführleitung 22 aus, die einen Teil des Reduktionsgases über einen Wäscher 23 und einen Verdichter 24 wiederum in die Reduktionsgas-Zuleitung 12 zurückführt, und zwar vor der Anordnung des Heißgaszyklons 19, wodurch eine Einstellung der Reduktionsgastemperatur ermöglicht wird.

In der Reduktionsgasleitung 13 bzw. in der Reduktionsgas-Zuleitung 12 sind jeweils in Gasströmungsrichtung vor den Wirbelschichtreaktoren 1 bis 3 Brenner 25,25' und 25" vorgesehen, denen für die Teilverbrennung des Reduktionsgases Sauerstoff und/oder Luft zugeführt wird, wobei die Brenner von einer Einspeisung für Brenngas und Sauerstoff und/oder Luft sowie einer Brennkammer 25a, 25'a und 25"a gebildet werden. Diese Brenner 25, 25' und 25" können auch als Sauerstoff und/oder Luft zuführende Lanzen ausgebildet sein, wobei ein Teil der Reduktionsgasleitung als Brennkammer des Brenners 25 fungiert. Zum Zweck der Sauerstoffzuführung kann auch ein sauerstoffhältiges Gas verwendet werden. Durch die Menge an zugeführtem Sauerstoff und/oder zugeführter Luft kann die Verbrennung und damit die Temperatur des Reduktionsgases individuell nach den Erfordernissen der Reduktionsstufen bzw. der Vorwärmstufe gesteuert werden, wodurch für die Reduktion thermodynamisch günstige Voraussetzungen geschaffen und Autoreforming-Reaktionen begünstigt werden sowie die thermische Belastung je Wirbelschichtreaktor verringert wird.

Gemäß der in Fig. 2 dargestellten Verfahrensvariante zweigt von der Exportgas-Ableitung 14 nach dem Naßwäscher 15 eine Exportgasleitung 26 ab, die einen Teil des gereinigten Exportgases über einen Verdichter 27 den in den Reduktionsgasleitungen 13 und der Reduktionsgas-Zuleitung 12 vorgesehenen Brennern 25,25' und 25" parallel zuführt, so daß es dort zusammen mit Sauerstoff und/oder Luft verbrennt und somit dem Reduktionsgas die erforderliche Wärme liefert.

Das in Fig. 3 dargestellte erfindungsgemäße Verfahren unterscheidet sich von der in Fig. 1 dargestellten Verfahrensvariante dadurch, daß die Zuführung von Wärme zum Reduktionsgas durch Verbrennung eines Teils des Kühlgases zusammen mit Sauerstoff und/oder Luft und nicht durch Verbrennung von den Wirbelschichtreaktoren zugeführtem Reduktionsgas erfolgt. Zu diesem Zweck zweigt eine Kühlgasleitung 28 von der Gasrückführleitung 22 nach dem Wäscher 23 ab, die einen Teil des Kühlgases über einen Verdichter 29 parallel zu den Brennern 25,25' und 25" transportiert.

Fig. 4 zeigt eine bevorzugte Ausführungsform der in Fig. 2 dargestellten Verfahrensvariante. Hierbei mündet die Exportgasleitung 26 in den von den Brennkammern 25a, 25'a und 25"a gebildeten Brennern 25,25' und 25", die im Gegensatz zur Darstellung in Fig. 2 nicht in den Reduktionsgasleitungen 13 bzw. der Reduktionsgas-Zuleitung 12 integriert sind.

In Fig. 5 ist die zu Fig.4 analoge Ausführungsform des in Fig. 3 dargestellten Verfahrens veranschaulicht. Der zur Verbrennung bestimmte Teil des Kühlgases wird zusammen mit Sauerstoff und/oder Luft in separaten Brennkammern 25a, 25'a und 25"a, die die Brenner 25, 25' und 25" bilden, verbrannt und danach in die Reduktionsgasleitungen 13 bzw. die Reduktionsgas-Zuführung 12 eingeleitet.

Gemäß einer bevorzugten Ausführungsform der Erfindung erfolgt die Verbrennung des vei-wendeten Brenngases (Reduktionsgas, Exportgas oder Kühlgas) zusammen mit Sauerstoff und/oder Luft mittels eines einem Wirbelschichtreaktor zugeordneten Brenners.

Der in Fig. 6 schematisch dargestellte Wirbelschichtreaktor 30 zeigt einen in drei Zonen gegliederten Innenraum 31, zu dem unten eine Gaszuführungsleitung 32 hin- und am oberen Ende eine Abgasleitung 33 wegführt. Die unterste Zone 34 ist von der mittleren Zone 35 durch den Verteilerboden 37 getrennt, der das durch den Innenraum 31 des Wirbelschichtreaktors 30 von unten nach oben strömende Reduktionsgas über den ganzen Querschnitt des Wirbelschichtreaktors 30 gleichmäßig verteilt und dadurch ein einheitliches Wirbelbett aus Feinerzteilchen erzeugt. Die Grenze zwischen der vom Wirbelbett gebildeten mittleren Zone 35 und der obersten Zone 36, dem sogenannten Freeboard, ist weniger scharf als bei den beiden unteren Zonen. Im Freeboard findet eine Beruhigung des Gasraums statt, wodurch bewirkt wird, daß der Austrag von Erzteilchen aus dem Wirbelschichtreaktor 30 minimiert wird. In der untersten Zone 34 unterhalb des Verteilerbodens 37 ist ein Brenner 38 angeordnet, zu dem eine nicht dargestellte Sauerstoff- und/oder Luftleitung sowie eine Leitung für Reduktionsgas, Exportgas, Kühlgas, externes Brenngas und/oder feste und/oder flüssige Brennstoffe rühren. Es kann aber auch nur eine Leitung für Sauerstoff- und/oder Luft vorgesehen sein, wobei die Verbrennung des Reduktionsgases direkt im Reaktor stattfindet. Die heißen Verbrennungsgase führen dem in den Wirbelschichtreaktor 30 strömenden Reduktionsgas Wärme zu bzw. führen zu Autoreforming-Reaktionen. Vorteilhaft können dem Reduktionsgas über den Brenner 38 auch den Reduktandenanteil des Reduktionsgases erhöhende Stoffe, wie Erdgas und/oder Kohle, zugemischt werden.

Bei der in Fig. 7 dargestellten Ausführungsform ist der Brenner 38 in der mittleren Zone 35, im Wirbelbett, angeordnet. Diese Ausführungsform ist besonders dann vorteilhaft, wenn das Reduktionsgas besonders staubbeladen ist, da hierbei keine Gefahr besteht, daß der Verteilerboden 37 durch anschmelzenden Staub verlegt wird.

Fig. 8 zeigt eine bevorzugte Ausführungsform, bei welcher der Brenner 38 oberhalb des Wirbelbetts 35, d.h. im Freeboard 36, angeordnet ist. Hierbei erfolgt die Wärmeübertragung mittels Strahlung und/oder Konvektion durch aus dem Wirbelbett ausgetragene Partikel.

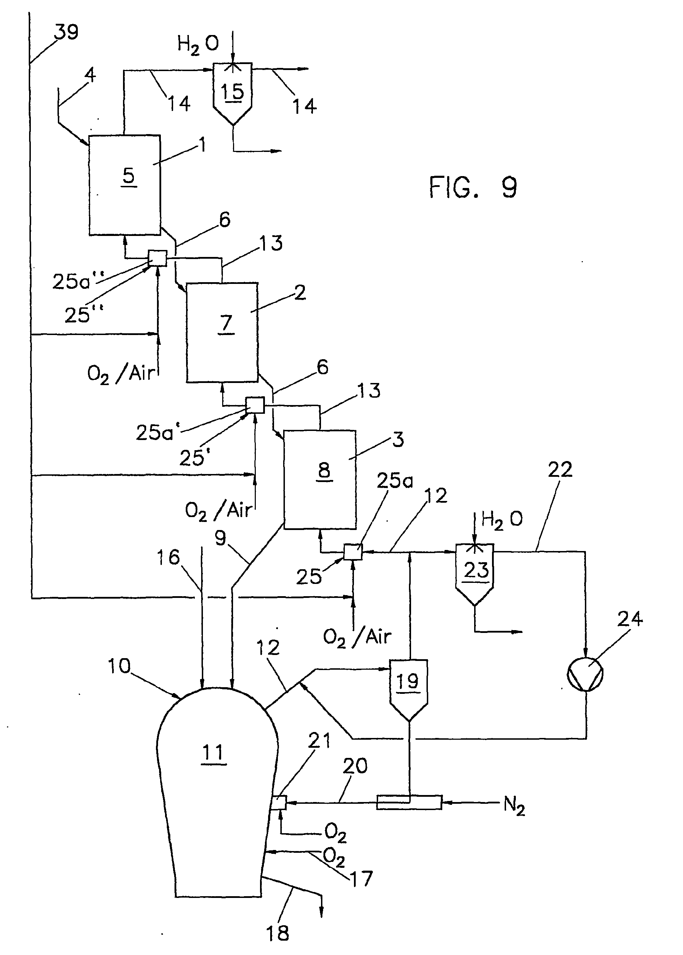

Die in Fig. 9 veranschaulichte Verfahrensvariante weist im wesentlichen alle Merkmale der in Fig. 2 dargestellten Anlage auf. Im Unterschied zu Fig. 2 wird den in den Reduktionsgasleitungen 13 und der Reduktionsgas-Zuleitung 12 vorgesehenen Brennern 25, 25' und 25" jedoch kein Exportgas über die Leitung 26 und den Verdichter 27 zugeführt, sondern externes Brenngas und/oder fester und/oder flüssiger Brennstoff, das bzw. der mittels einer Leitung 39 zu den Brennern 25, 25' und 25" transportiert wird.
Die Erfindung beschränkt sich nicht auf die in der Zeichnung dargestellten Ausführungsbeispiele, sondern kann in verschiedener Hinsicht modifiziert werden. Beispielsweise ist es möglich, die Anzahl der Wirbelschichtreaktoren je nach den Erfordernissen zu wählen. Ebenso kann das Reduktionsgas nach verschiedenen bekannten Methoden erzeugt werden.

## Patentansprüche

1. Verfahren zur Gasreduktion von teilchenförmigen oxidhältigen Erzen, insbesondere von eisenoxidhältigem Material, im Wirbelschichtverfahren bei einem Druck ≤ 5 bar, wobei das Erz mit Hilfe eines aus Kohle erzeugten Reduktionsgases in einem als Vorwärmstufe (5) ausgebildeten Wirbelschichtreaktor (1,30) erhitzt, gegebenenfalls auch vorreduziert wird, anschliessend in mindestens einem als Reduktionsstufe (7,8) ausgebildeten Wirbelschichtreaktor (2,3,30) zu Eisenschwamm reduziert wird und das Reduktionsgas über eine Reduktionsgas-Zuleitung (12) bzw. Reduktionsgasleitung (13) in Gegenrichtung des von Stufe zu Stufe geleiteten zu reduzierenden Materials von der Reduktionsstufe (7,8) zur Vorwärmstufe (5) geleitet wird und nach Reinigung als Exportgas abgezogen wird, und dem der Reduktionsstufe (7,8) und/oder Vorwärmstufe (5) zugeführten Reduktionsgas Wärme zugeführt wird, **dadurch gekennzeichnet, dass** die Wärmezufuhr erfolgt durch Verbrennung eines Teils des Exportgases aus der Vorwärmstufe (5) in einem in der Reduktionsgas-Zuleitung (12) bzw. Reduktionsgasleitung (13) vorgesehenen Brenner (25), oder durch Verbrennung eines Teils des Exportgases aus der Vorwärmstufe (5) in einer von der Reduktionsgas-Zuleitung (12) bzw. Reduktionsgasleitung (13) separaten Brennkammer (25a) mit anschliessender Einleitung der Verbrennungsgase und gegebenenfalls nicht verbrannter Feststoffe in die Reduktionsgas-Zuleitung (12) bzw. Reduktionsgasleitung (13), oder durch Verbrennung eines Teils des Exportgases aus der Vorwärmstufe (5) mittels mindestens eines dem Wirbelschichtreaktor (30) zugeordneten Brenners (38), wobei die Verbrennungsgase direkt in den Wirbelschichtreaktor (30) eingeleitet werden, zusammen mit Sauerstoff und/oder Luft. (Fig. 2,4)

2. Verfahren zur Gasreduktion von teilchenförmigen oxidhältigen Erzen, insbesondere von eisenoxidhältigem Material, im Wirbelschichtverfahren bei einem Druck ≤ 5 bar, wobei das Erz mit Hilfe eines aus Kohle erzeugten Reduktionsgases in einem als Vorwärmstufe (5) ausgebildeten Wirbelschichtreaktor (1,30) erhitzt, gegebenenfalls auch vorreduziert wird, anschliessend in mindestens einem als Reduktionsstufe (7,8) ausgebildeten Wirbelschichtreaktor (2,3,30) zu Eisenschwamm reduziert wird und das Reduktionsgas über eine Reduktionsgas-Zuleitung (12) bzw. Reduktionsgasleitung (13) in Gegenrichtung des von Stufe zu Stufe geleiteten zu reduzierenden Materials von der Reduktionsstufe (7,8) zur Vorwärmstufe (5) geleitet wird und nach Reinigung als Exportgas abgezogen wird, und dem der Reduktionsstufe (7,8) und/oder Vorwärmstufe (5) zugeführten Reduktionsgas Wärme zugeführt wird, **dadurch gekennzeichnet, dass** die Wärmezufuhr erfolgt durch Verbrennung des aus der Gasrückführleitung (22) mittels Kühlgasleitung (28) abgezweigten und über Verdichter (29) parallel zu den Brennern (25, 25', 25") transportierten Teils des Kühlgases in einem in der Reduktionsgas-Zuleitung (12) bzw. Reduktionsgasleitung (13) vorgesehenen Brenner (25), oder durch Verbrennung eines Teils des Kühlgases in einer von der Reduktionsgas-Zuleitung (12) bzw. Reduktionsgasleitung (13) separaten Brennkammer (25a) mit anschliessender Einleitung der Verbrennungsgase und gegebenenfalls nicht verbrannter Feststoffe in die Reduktionsgas-Zuleitung (12) bzw. Reduktionsgasleitung (13), oder durch Verbrennung eines Teils des Kühlgases mittels mindestens eines dem Wirbelschichtreaktor (30) zugeordneten Brenners (38), wobei die Verbrennungsgase direkt in den Wirbelschichtreaktor (30) eingeleitet werden, zusammen mit Sauerstoff und/oder Luft. (Fig. 3,5)

3. Verfahren nach einem der Ansprüche 1 bis 2, **dadurch gekennzeichnet, dass** der zu verbrennende Teil des Exportgases oder des Kühlgases vor der Verbrennung einem Waschvorgang unterzogen wird.

4. Verfahren zur Gasreduktion von teilchenförmigen oxidhältigen Erzen, insbesondere von eisenoxidhältigem Material, im Wirbelschichtverfahren bei einem Druck ≤ 5 bar, wobei das Erz mit Hilfe eines aus Kohle erzeugten Reduktionsgases in einem als Vorwärmstufe (5) ausgebildeten Wirbelschichtreaktor (1,30) erhitzt, gegebenenfalls auch vorreduziert wird, anschliessend in mindestens einem als Reduktionsstufe (7,8) ausgebildeten Wirbelschichtreaktor (2,3,30) zu Eisenschwamm reduziert wird und das Reduktionsgas über eine Reduktionsgas-Zuleitung (12) bzw. Reduktionsgasleitung (13) in Gegenrichtung des von Stufe zu Stufe geleiteten zu reduzierenden Materials von der Reduktionsstufe (7,8) zur Vorwärmstufe (5) geleitet wird und nach Reinigung als Exportgas abgezogen wird, wobei ein Teil des Reduktionsgases abgezweigt und nach einem Waschvorgang als Kühlgas zur Kühlung des Reduktionsgases verwendet wird, und dem der Reduktionsstufe (7,8) und/oder Vorwärmstufe (5) zugeführten Reduktionsgas Wärme zugeführt wird, **dadurch gekennzeichnet, dass** die Wärmezufuhr erfolgt durch Verbrennung von externem Brenngas und/oder festem und/oder flüssigem Brennstoff in einem in der Reduktionsgas-Zuleitung (12) bzw. Reduktionsgasleitung (13) vorgesehenen Brenner (25), oder durch Verbrennung von externem Brenngas und/oder festem und/oder flüssigem Brennstoff in einer von der Reduktionsgas-Zuleitung (12) bzw. Reduktionsgasleitung (13) separaten Brennkammer (25a) mit anschliessender Einleitung der Verbrennungsgase und gegebenenfalls nicht verbrannter Feststoffe in die Reduktionsgas-Zuleitung (12) bzw. Reduktionsgasleitung (13), oder durch Verbrennung von externem Brenngas und/oder festem und/oder flüssigem Brennstoff mittels mindestens eines dem Wirbelschichtreaktor (30) zugeordneten Brenners (38), wobei die Verbrennungsgase direkt in den Wirbelschichtreaktor (30) eingeleitet werden, zusammen mit Sauerstoff und/oder Luft. (Fig. 9)

5. Verfahren nach einem der Ansprüche 1 bis 4, **dadurch gekennzeichnet, dass** in Ergänzung des jeweils verwendeten Gases für die Verbrennung weiters Exportgas und/oder Kühlgas und/oder externes Brenngas und/oder fester und/oder flüssiger und/oder gasfòrmiger Brennstoff auf Kohlenwasserstoffbasis eingesetzt wird.

6. Verfahren nach einem der Ansprüche 1 bis 5, **dadurch gekennzeichnet, dass** dem der Reduktionsstufe (7,8) und/oder Vorwärmstufe(5) zugeführten Reduktionsgas ein den Reduktandenanteil des Reduktionsgases erhöhender Stoff, insbesondere Erdgas und/oder Kohle, zugemischt wird, welcher den Reduktandenanteil des Reduktionsgases duch zumindest teilweises Umsetzen mit dem Reduktionsgas erhöht.

7. Anlage zur Durchführung des Verfahrens nach einem der Ansprüche 1, 3 oder 6, mit mindestens zwei in Serie hintereinandergeschalteten Wirbelschichtreaktoren zur Gasreduktion von teilchenförmigen oxidhältigen Erzen mittels eines aus Kohle erzeugten CO-und H2-hältigen Reduktionsgases, mit einer Reduktionsgas-Zuleitung (12) zu dem in Fliessrichtung des oxidhältigen Materials gesehenen letzten Wirbelschichtreaktor (3,30), einer verbrauchtes Reduktionsgas als Exportgas abführenden Ableitung (14) aus dem in Fliessrichtung des oxidhältigen Materials gesehenen ersten Wirbelschichtreaktor (1,30), einer von der Reduktionsgas-Zuleitung (12) abzweigenden Gasrückführleitung (22) für Kühlgas, die über einen Wäscher (23) wieder in der Reduktionsgas-Zuleitung (12) mündet, und mit einer zur Führung des Reduktionsgases von einem Wirbelschichtreaktor (3,30) in den diesem vorgeschalteten Wirbelschichtreaktor (1,2,30) vorgesehenen Reduktionsgasleitung (13), **dadurch gekennzeichnet, dass** die Anlage leitungsmässig mit mindestens einem Brenner (25,38) mit einer Zuleitung (26) für Exportgas und Sauerstoff und/oder Luft zur Verbrennung des Exportgases zusammen mit Sauerstoff und/oder Luft verbunden ist, wobei der Brenner (25) mit seiner Brennkammer (25a) direkt in der Reduktionsgas-Zuleitung (12) bzw. der Reduktionsgasleitung (13) vorgesehen ist, oder der Brenner (25) eine von der Reduktionsgas-Zuleitung (12) bzw. Reduktionsgasleitung (13) separate Brennkammer (25a) aufweist, die leitungsmässig mit der Reduktionsgas-Zuleitung (12) bzw. Reduktionsgasleitung (13) verbunden ist, oder der Brenner (38) in einem Wirbelschichtreaktor (30) angeordnet ist, und zwar entweder unterhalb des Wirbelbetts (35), in Höhe des Wirbelbetts (35) oder oberhalb des Wirbelbetts (35), wobei die Zuleitung (26) des Brenners (25,38) für Exportgas mit der Exportgas abführenden Ableitung (14) verbunden ist.

8. Anlage zur Durchführung des Verfahrens nach einem der Ansprüche 2, 3, 5 oder 6, mit mindestens zwei in Serie hintereinandergeschalteten Wirbelschichtreaktoren zur Gasreduktion von teilchenförmigen oxidhältigen Erzen mittels eines aus Kohle erzeugten CO-und H2-hältigen Reduktionsgases, mit einer Reduktionsgas-Zuleitung (12) zu dem in Fliessrichtung des oxidhältigen Materials gesehenen letzten Wirbelschichtreaktor (3,30), einer verbrauchtes Reduktionsgas als Exportgas abführenden Ableitung (14) aus dem in Fliessrichtung des oxidhältigen Materials gesehenen ersten Wirbelschichtreaktor (1,30), einer von der Reduktionsgas-Zuleitung (12) abzweigenden Gasrückführleitung (22) für Kühlgas, die über einen Wäscher (23) wieder in der Reduktionsgas-Zuleitung (12) mündet, und mit einer zur Führung des Reduktionsgases von einem Wirbelschichtreaktor (3,30) in den diesem vorgeschalteten Wirbelschichtreaktor (1,2,30) vorgesehenen Reduktionsgasleitung (13), **dadurch gekennzeichnet, dass** die Anlage leitungsmässig mit mindestens einem Brenner (25,38) mit einer Zuleitung (28) für Kühlgas und Sauerstoff und/oder Luft zur Verbrennung des Kühlgases zusammen mit Sauerstoff und/oder Luft verbunden ist, wobei der Brenner (25) mit seiner Brennkammer (25a) direkt in der Reduktionsgas-Zuleitung (12) bzw. der Reduktionsgasleitung (13) vorgesehen ist, oder der Brenner (25) eine von der Reduktionsgas-Zuleitung (12) bzw. Reduktionsgasleitung (13) separate Brennkammer (25a) aufweist, die leitungsmässig mit der Reduktionsgas-Zuleitung (12) bzw. Reduktionsgasleitung (13) verbunden ist, oder der Brenner (38) in einem Wirbelschichtreaktor (30) angeordnet ist, und zwar entweder unterhalb des Wirbelbetts (35), in Höhe des Wirbelbetts (35) oder oberhalb des Wirbelbetts (35), wobei die Zuleitung (28) des Brenners (25,38) für Kühlgas von der Gasrückführleitung (22) für Kühlgas abzweigt.

9. Anlage zur Durchführung des Verfahrens nach einem der Ansprüche 4 bis 6, mit mindestens zwei in Serie hintereinandergeschalteten Wirbelschichtreaktoren zur Gasreduktion von teilchenförmigen oxidhältigen Erzen mittels eines aus Kohle erzeugten CO-und H2-hältigen Reduktionsgases, mit einer Reduktionsgas-Zuleitung (12) zu dem in Fliessrichtung des oxidhältigen Materials gesehenen letzten Wirbelschichtreaktor (3,30), einer verbrauchtes Reduktionsgas als Exportgas abführenden Ableitung (14) aus dem in Fliessrichtung des oxidhältigen Materials gesehenen ersten Wirbelschichtreaktor (1,30), einer von der Reduktionsgas-Zuleitung (12) abzweigenden Gasrückführleitung (22) für Kühlgas, die über einen Wäscher (23) wieder in der Reduktionsgas-Zuleitung (12) mündet, und mit einer zur Führung des Reduktionsgases von einem Wirbelschichtreaktor (3,30) in den diesem vorgeschalteten Wirbelschichtreaktor (1,2,30) vorgesehenen Reduktionsgasleitung (13), **dadurch gekennzeichnet, dass** jeder Wirbelschichtreaktor (1,2,3,30) mit einem eigenen Brenner (25,38) mit einer Zuleitung (39) für externes Brenngas und/oder festen und/oder flüssigen Brennstoff und Sauerstoff und/oder Luft zur Verbrennung von externem Brenngas oder festem oder flüssigem Brennstoff zusammen mit Sauerstoff und/oder Luft verbunden ist, wobei der Brenner (25) mit seiner Brennkammer (25a) direkt in der Reduktionsgas-Zuleitung (12) bzw. der Reduktionsgasleitung (13) vorgesehen ist, oder der Brenner (25) eine von der Reduktionsgas-Zuleitung (12) bzw. Reduktionsgasleitung (13) separate Brennkammer (25a) aufweist, die leitungsmässig mit der Reduktionsgas-Zuleitung (12) bzw. Reduktionsgasleitung (13) verbunden ist, oder der Brenner (38) in einem Wirbelschichtreaktor (30) angeordnet ist, und zwar entweder unterhalb des Wirbelbetts (35), in Höhe des Wirbelbetts (35) oder oberhalb des Wirbelbetts (35).

10. Anlage nach Anspruch 7, 8 oder 9, **dadurch gekennzeichnet, dass** in der Exportgas-Ableitung (14) ein Wäscher (15) vorgesehen ist und gewaschenes Exportgas über eine Exportgasleitung (26) dem Brenner (25) zuführbar ist. (Fig. 2,4)

## Claims

1. Process for the gas reduction of particulate oxide-containing ores, in particular iron-oxide-containing material, by the fluidized-bed process at a pressure of ≤ 5 bar, the ore being heated, optionally also pre-reduced, in a fluidized-bed reactor (1, 30) designed as a pre-heating stage (5) with the aid of a reducing gas produced from coal, subsequently reduced to sponge iron in at least one fluidized-bed reactor (2, 3, 30) designed as a reduction stage (7, 8) and the reducing gas being conducted from the reduction stage (7, 8) to the pre-heating stage (5) via a reducing gas feed line (12) or reducing gas line (13) in a direction opposite to that of the material to be reduced that is conducted from stage to stage, and after cleaning drawn off as an export gas, and heat being supplied to the reducing gas that is fed to the reduction stage (7, 8) and/or pre-heating stage (5), **characterized in that** the heat is supplied by burning part of the export gas from the pre-heating stage (5) in a burner (25) provided in the reducing gas feed line (12) or reducing gas line (13), or by burning part of the export gas from the pre-heating stage (5) in a combustion chamber (25a) that is separate from the reducing gas feed line (12) or reducing gas line (13), with subsequent introduction of the combustion gases and possibly unburned solid materials into the reducing gas feed line (12) or reducing gas line (13), or by burning part of the export gas from the pre-heating stage (5) by means of at least one burner (38) assigned to the fluidized-bed reactor (30), the combustion gases being introduced directly into the fluidized-bed reactor (30), together with oxygen and/or air. (Figures 2, 4)

2. Process for the gas reduction of particulate oxide-containing ores, in particular iron-oxide-containing material, by the fluidized-bed process at a pressure of ≤ 5 bar, the ore being heated, optionally also pre-reduced, in a fluidized-bed reactor (1, 30) designed as a pre-heating stage (5) with the aid of a reducing gas produced from coal, subsequently reduced to sponge iron in at least one fluidized-bed reactor (2, 3, 30) designed as a reduction stage (7, 8) and the reducing gas being conducted from the reduction stage (7, 8) to the pre-heating stage (5) via a reducing gas feed line (12) or reducing gas line (13) in a direction opposite to that of the material to be reduced that is conducted from stage to stage, and after cleaning drawn off as an export gas, and heat being supplied to the reducing gas that is fed to the reduction stage (7, 8) and/or pre-heating stage (5), **characterized in that** the heat is supplied by burning the part of the cooling gas that is branched off from the gas return line (22) by means of the cooling gas line (28) and transported by means of compressors (29) in parallel to the burners (25, 25', 25"), in a burner (25) provided in the reducing gas feed line (12) or reducing gas line (13), or by burning part of the cooling gas in a combustion chamber (25a) that is separate from the reducing gas feed line (12) or reducing gas line (13), with subsequent introduction of the combustion gases and possibly unburned solid materials into the reducing gas feed line (12) or reducing gas line (13), or by burning part of the cooling gas by means of at least one burner (38) assigned to the fluidized-bed reactor (30), the combustion gases being introduced directly into the fluidized-bed reactor (30), together with oxygen and/or air. (Figures 3, 5)

3. Process according either of Claims 1 and 2, **characterized in that** the part of the export gas or the cooling gas that is to be burned is subjected to a scrubbing operation before combustion.

4. Process for the gas reduction of particulate oxide-containing ores, in particular iron-oxide-containing material, by the fluidized-bed process at a pressure of ≤ 5 bar, the ore being heated, optionally also pre-reduced, in a fluidized-bed reactor (1, 30) designed as a pre-heating stage (5) with the aid of a reducing gas produced from coal, subsequently reduced to sponge iron in at least one fluidized-bed reactor (2, 3, 30) designed as a reduction stage (7, 8) and the reducing gas being conducted from the reduction stage (7, 8) to the pre-heating stage (5) via a reducing gas feed line (12) or reducing gas line (13) in a direction opposite to that of the material to be reduced that is conducted from stage to stage, and after cleaning drawn off as an export gas, part of the reducing gas being branched off and used after the scrubbing operation as cooling gas for cooling the reducing gas, and heat being supplied to the reducing gas that is fed to the reduction stage (7, 8) and/or pre-heating stage (5), **characterized in that** the heat is supplied by burning external combustible gas and/or solid and/or liquid fuel in a burner (25) provided in the reducing gas feed line (12) or reducing gas line (13), or by burning external combustible gas and/or solid and/or liquid fuel in a combustion chamber (25a) that is separate from the reducing gas feed line (12) or reducing gas line (13), with subsequent introduction of the combustion gases and possibly unburned solid materials into the reducing gas feed line (12) or reducing gas line (13), or by burning external combustible gas and/or solid and/or liquid fuel by means of at least one burner (38) assigned to the fluidized-bed reactor (30), the combustion gases being introduced directly into the fluidized-bed reactor (30), together with oxygen and/or air. (Figure 9)

5. Process according to one of Claims 1 to 4, **characterized in that** export gas and/or cooling gas and/or external combustible gas and/or solid and/or liquid and/or gaseous fuel on a hydrocarbon basis is used for the combustion to supplement the gas that is respectively used.

6. Process according to one of Claims 1 to 5, **characterized in that** a material increasing the proportion of reductants in the reducing gas, doing so by at least partially reacting with the reducing gas, in particular natural gas and/or coal, is admixed with the reducing gas that is fed to the reduction stage (7, 8) and/or pre-heating stage (5).

7. Installation for carrying out the process according to one of Claims 1, 3 or 6, comprising at least two fluidized-bed reactors connected one behind the other in series for the gas reduction of particulate oxide-containing ores by means of a reducing gas containing CO and H₂ produced from coal, comprising a reducing gas feed line (12) to the last fluidized-bed reactor (3, 30) seen in the direction of flow of the oxide-containing material, a discharge line (14) carrying away spent reducing gas as export gas from the first fluidized-bed reactor (1, 30) seen in the direction of flow of the oxide-containing material, a gas return line (22) for cooling gas, branching off from the reducing gas feed line (12) and opening out again in the reducing gas feed line (12) via a scrubber (23), and comprising a reducing gas line (13) intended for conducting the reducing gas from one fluidized-bed reactor (3, 30) into the fluidized-bed reactor (1, 2, 30) connected before it, **characterized in that** the installation is connected in terms of conduction to at least one burner (25, 38) with a feed line (26) for export gas and oxygen and/or air for the burning of the export gas together with oxygen and/or air, the burner (25) being provided with its combustion chamber (25a) directly in the reducing gas feed line (12) or the reducing gas line (13), or the burner (25) having a combustion chamber (25a) that is separate from the reducing gas feed line (12) or reducing gas line (13) and is connected in terms of conduction to the reducing gas feed line (12) or reducing gas line (13), or the burner (38) being arranged in a fluidized-bed reactor (30), to be precise either under the fluidized bed (35), at the level of the fluidized bed (35) or above the fluidized bed (35), the feed line (26) of the burner (25, 38) for export gas being connected to the discharge line (14) carrying away export gas.

8. Installation for carrying out the process according to one of Claims 2, 3, 5 or 6, comprising at least two fluidized-bed reactors connected one behind the other in series for the gas reduction of particulate oxide-containing ores by means of a reducing gas containing CO and H₂ produced from coal, comprising a reducing gas feed line (12) to the last fluidized-bed reactor (3, 30) seen in the direction of flow of the oxide-containing material, a discharge line (14) carrying away spent reducing gas as export gas from the first fluidized-bed reactor (1, 30) seen in the direction of flow of the oxide-containing material, a gas return line (22) for cooling gas, branching off from the reducing gas feed line (12) and opening out again in the reducing gas feed line (12) via a scrubber (23), and comprising a reducing gas line (13) intended for conducting the reducing gas from one fluidized-bed reactor (3, 30) into the fluidized-bed reactor (1, 2, 30) connected before it, **characterized in that** the installation is connected in terms of conduction to at least one burner (25, 38) with a feed line (28) for cooling gas and oxygen and/or air for the burning of the cooling gas together with oxygen and/or air, the burner (25) being provided with its combustion chamber (25a) directly in the reducing gas feed line (12) or the reducing gas line (13), or the burner (25) having a combustion chamber (25a) that is separate from the reducing gas feed line (12) or reducing gas line (13) and is connected in terms of conduction to the reducing gas feed line (12) or reducing gas line (13), or the burner (38) being arranged in a fluidized-bed reactor (30), to be precise either under the fluidized bed (35), at the level of the fluidized bed (35) or above the fluidized bed (35), the feed line (28) of the burner (25, 38) for cooling gas branching off from the gas return line (22) for cooling gas.

9. Installation for carrying out the process according to one of Claims 4 to 6, comprising at least two fluidized-bed reactors connected one behind the other in series for the gas reduction of particulate oxide-containing ores by means of a reducing gas containing CO and H₂ produced from coal, comprising a reducing gas feed line (12) to the last fluidized-bed reactor (3, 30) seen in the direction of flow of the oxide-containing material, a discharge line (14) carrying away spent reducing gas as export gas from the first fluidized-bed reactor (1, 30) seen in the direction of flow of the oxide-containing material, a gas return line (22) for cooling gas, branching off from the reducing gas feed line (12) and opening out again in the reducing gas feed line (12) via a scrubber (23), and comprising a reducing gas line (13) intended for conducting the reducing gas from one fluidized-bed reactor (3, 30) into the fluidized-bed reactor (1, 2, 30) connected before it, **characterized in that** each fluidized-bed reactor (1, 2, 3, 30) is connected to a burner (25, 38) of its own with a feed line (39) for external combustible gas and/or solid and/or liquid fuel and oxygen and/or air for the burning of external combustible gas or solid or liquid fuel together with oxygen and/or air, the burner (25) being provided with its combustion chamber (25a) directly in the reducing gas feed line (12) or the reducing gas line (13), or the burner (25) having a combustion chamber (25a) that is separate from the reducing gas feed line (12) or reducing gas line (13) and is connected in terms of conduction to the reducing gas feed line (12) or reducing gas line (13), or the burner (38) being arranged in a fluidized-bed reactor (30), to be precise either under the fluidized bed (35), at the level of the fluidized bed (35) or above the fluidized bed (35).

10. Installation according to Claim 7, 8 or 9, **characterized in that** a scrubber (15) is provided in the export gas discharge line (14) and scrubbed export gas can be fed to the burner (25) via an export gas line (26). (Figures 2, 4)

## Revendications

1. Procédé pour la réduction au gaz de minerais particulaires contenant des oxydes, en particulier de matière contenant de l'oxyde de fer, selon un procédé à lit fluidisé à une pression ≤ 5 bars, dans lequel le minerai est chauffé à l'aide d'un gaz réducteur produit à partir de charbon dans un réacteur à lit fluidisé (1, 30) réalisé sous forme d'étage de pré-chauffage (5), est éventuellement aussi pré-réduit, et est ensuite réduit dans au moins un réacteur à lit fluidisé (2, 3, 30) réalisé sous forme d'étage de réduction (7, 8), pour donner une éponge de fer, le gaz réducteur étant acheminé, par le biais d'une conduite d'amenée de gaz réducteur (12) ou d'une conduite de gaz réducteur (13), dans le sens inverse de la matière à réduire acheminée d'étage en étage, de l'étage de réduction (7, 8) à l'étage de pré-chauffage (5), et étant extrait sous forme de gaz de dégagement après sa purification, et de la chaleur est apportée au gaz réducteur acheminé à l'étage de réduction (7, 8) et/ou à l'étage de pré-chauffage (5), **caractérisé en ce que** l'apport de chaleur s'effectue par combustion d'une partie du gaz de dégagement provenant de l'étage de pré-chauffage (5) dans un brûleur (25) prévu dans la conduite d'amenée de gaz réducteur (12) ou la conduite de gaz réducteur (13), ou par combustion d'une partie du gaz de dégagement provenant de l'étage de pré-chauffage (5) dans une chambre de combustion (25a) séparée de la conduite d'amenée de gaz réducteur (12) ou de la conduite de gaz réducteur (13), avec introduction consécutive des gaz de combustion et éventuellement des matières solides non brûlées dans la conduite d'amenée de gaz réducteur (12) ou la conduite de gaz réducteur (13), ou par combustion d'une partie du gaz de dégagement provenant de l'étage de pré-chauffage (5) au moyen d'au moins un brûleur (38) associé au réacteur à lit fluidisé (30), les gaz de combustion étant introduits directement dans le réacteur à lit fluidisé (30), conjointement avec de l'oxygène et/ou de l'air. (Figures 2, 4).

2. Procédé pour la réduction au gaz de minerais particulaires contenant des oxydes, en particulier de matière contenant de l'oxyde de fer, selon un procédé à lit fluidisé à une pression ≤ 5 bars, dans lequel le minerai est chauffé à l'aide d'un gaz réducteur produit à partir de charbon dans un réacteur à lit fluidisé (1, 30) réalisé sous forme d'étage de pré-chauffage (5), est éventuellement aussi pré-réduit, et est ensuite réduit dans au moins un réacteur à lit fluidisé (2, 3, 30) réalisé sous forme d'étage de réduction (7, 8), pour donner une éponge de fer, le gaz réducteur étant acheminé, par le biais d'une conduite d'amenée de gaz réducteur (12) ou d'une conduite de gaz réducteur (13), dans le sens inverse de la matière à réduire acheminée d'étage en étage, de l'étage de réduction (7, 8) à l'étage de pré-chauffage (5), et étant extrait sous forme de gaz de dégagement après sa purification, et de la chaleur est apportée au gaz réducteur acheminé à l'étage de réduction (7, 8) et/ou à l'étage de pré-chauffage (5), **caractérisé en ce que** l'apport de chaleur s'effectue par combustion de la partie du gaz de refroidissement soutiré de la conduite de retour de gaz (22) au moyen de la conduite de gaz de refroidissement (28) et transporté par le biais du compresseur (29) parallèlement aux brûleurs (25, 25', 25'') dans un brûleur (25) prévu dans la conduite d'amenée de gaz réducteur (12) ou la conduite de gaz réducteur (13), ou par combustion d'une partie du gaz de refroidissement dans une chambre de combustion (25a) séparée de la conduite d'amenée de gaz réducteur (12) ou de la conduite de gaz réducteur (13), avec introduction consécutive des gaz de combustion et éventuellement des matières solides non brûlées dans la conduite d'amenée de gaz réducteur (12) ou la conduite de gaz réducteur (13), ou par combustion d'une partie du gaz de refroidissement au moyen d'au moins un brûleur (38) associé au réacteur à lit fluidisé (30), les gaz de combustion étant introduits directement dans le réacteur à lit fluidisé (30) conjointement avec de l'oxygène et/ou de l'air. (Figures 3, 5).

3. Procédé selon l'une quelconque des revendications 1 à 2, **caractérisé en ce que** la partie du gaz de dégagement ou du gaz de refroidissement à brûler est soumise avant la combustion à une opération d'épuration.

4. Procédé pour la réduction au gaz de minerais particulaires contenant des oxydes, en particulier de matière contenant de l'oxyde de fer, selon un procédé à lit fluidisé à une pression ≤ 5 bars, dans lequel le minerai est chauffé à l'aide d'un gaz réducteur produit à partir de charbon dans un réacteur à lit fluidisé (1, 30) réalisé sous forme d'étage de pré-chauffage (5), est éventuellement aussi pré-réduit, et est ensuite réduit dans au moins un réacteur à lit fluidisé (2, 3, 30) réalisé sous forme d'étage de réduction (7, 8), pour donner une éponge de fer, le gaz réducteur étant acheminé, par le biais d'une conduite d'amenée de gaz réducteur (12) ou d'une conduite de gaz réducteur (13), dans le sens inverse de la matière à réduire acheminée d'étage en étage, de l'étage de réduction (7, 8) à l'étage de pré-chauffage (5), et étant extrait sous forme de gaz de dégagement après sa purification, une partie du gaz réducteur étant déviée et après une opération d'épuration étant utilisée comme gaz de refroidissement pour refroidir le gaz réducteur, et de la chaleur est apportée au gaz réducteur acheminé à l'étage de réduction (7, 8) et/ou à l'étage de pré-chauffage (5), **caractérisé en ce que** l'apport de chaleur s'effectue par combustion de gaz comburant externe et/ou de combustible solide et/ou liquide dans un brûleur (25) prévu dans la conduite d'amenée de gaz réducteur (12) ou la conduite de gaz réducteur (13), ou par combustion de gaz comburant externe et/ou de combustible solide et/ou liquide dans une chambre de combustion (25a) séparée de la conduite d'amenée de gaz réducteur (12) ou de la conduite de gaz réducteur (13), avec introduction consécutive des gaz de combustion et éventuellement des matières solides non brûlées dans la conduite d'amenée de gaz réducteur (12) ou la conduite de gaz réducteur (13), ou par combustion de gaz comburant externe et/ou de combustible solide et/ou liquide au moyen d'au moins un brûleur (38) associé au réacteur à lit fluidisé (30), les gaz de combustion étant introduits directement dans le réacteur à lit fluidisé (30), conjointement avec de l'oxygène et/ou de l'air. (Figure 9).

5. Procédé selon l'une quelconque des revendications 1 à 4, **caractérisé en ce que** l'on utilise pour compléter le gaz utilisé respectivement pour la combustion, en plus du gaz de dégagement et/ou du gaz de refroidissement et/ou du gaz comburant externe et/ou du combustible solide et/ou liquide et/ou gazeux à base d'hydrocarbures.

6. Procédé selon l'une quelconque des revendications 1 à 5, **caractérisé en ce que** l'on mélange au gaz réducteur acheminé à l'étage de réduction (7, 8) et/ou à l'étage de pré-chauffage (5) une matière augmentant la proportion en réducteur du gaz réducteur, en particulier du gaz naturel et/ou du charbon, qui augmente la proportion en réducteur du gaz réducteur par une réaction au moins partielle avec le gaz réducteur.

7. Installation pour la mise en oeuvre du procédé selon l'une quelconque des revendications 1, 3 ou 5, comprenant au moins deux réacteurs à lit fluidisé montés l'un derrière l'autre en série pour la réduction au gaz de minerais particulaires contenant des oxydes au moyen d'un gaz réducteur contenant du CO et du H₂ obtenu à partir de charbon, avec une conduite d'amenée de gaz réducteur (12) au réacteur à lit fluidisé (3, 30) disposé en dernier dans la direction d'écoulement de la matière contenant des oxydes, avec une conduite d'évacuation (14) évacuant le gaz réducteur consommé sous forme de gaz de dégagement hors du réacteur à lit fluidisé (1, 30) disposé en premier dans la direction d'écoulement de la matière contenant des oxydes, une conduite de retour de gaz (22) pour le gaz de refroidissement, partant de la conduite d'amenée de gaz réducteur (12), et débouchant à nouveau dans la conduite d'amenée de gaz réducteur (12) par le biais d'un épurateur (23), et avec une conduite de gaz réducteur (13) prévue pour guider le gaz réducteur depuis un réacteur à lit fluidisé (3, 30) dans le réacteur à lit fluidisé (1, 2, 30) monté avant celui-ci, **caractérisée en ce que** l'installation est connectée, par des conduites, à au moins un brûleur (25, 38) avec une conduite d'amenée (26) pour le gaz de dégagement et l'oxygène et/ou l'air pour la combustion du gaz de dégagement conjointement avec l'oxygène et/ou l'air, le brûleur (25) étant prévu avec sa chambre de combustion (25a) directement dans la conduite d'amenée de gaz réducteur (12) ou la conduite de gaz réducteur (13), ou le brûleur (25) présentant une chambre de combustion (25a) séparée de la conduite d'amenée de gaz réducteur (12) ou de la conduite de gaz réducteur (13), qui est connectée par des conduites à la conduite d'amenée de gaz réducteur (12) ou à la conduite de gaz réducteur (13), ou le brûleur (38) étant disposé dans un réacteur à lit fluidisé (30) et ce soit en dessous du lit fluidisé (35) à la hauteur du lit fluidisé (35), soit au-dessus du lit fluidisé (35), la conduite d'amenée (26) du brûleur (25, 38) pour le gaz de dégagement étant connectée à la conduite d'évacuation (14) évacuant le gaz de dégagement.

8. Installation pour la mise en oeuvre du procédé selon l'une quelconque des revendications 2, 3, 5 ou 6, comprenant au moins deux réacteurs à lit fluidisé montés l'un derrière l'autre en série pour la réduction au gaz de minerais particulaires contenant des oxydes au moyen d'un gaz réducteur contenant du CO et du H₂ obtenu à partir de charbon, avec une conduite d'amenée de gaz réducteur (12) au réacteur à lit fluidisé (3, 30) disposé en dernier dans la direction d'écoulement de la matière contenant des oxydes, avec une conduite d'évacuation (14) évacuant le gaz réducteur consommé sous forme de gaz de dégagement hors du réacteur à lit fluidisé (1, 30) disposé en premier dans la direction d'écoulement de la matière contenant des oxydes, une conduite de retour de gaz (22) pour le gaz de refroidissement, partant de la conduite d'amenée de gaz réducteur (12), et débouchant à nouveau dans la conduite d'amenée de gaz réducteur (12) par le biais d'un épurateur (23), et avec une conduite de gaz réducteur (13) prévue pour guider le gaz réducteur depuis un réacteur à lit fluidisé (3, 30) dans le réacteur à lit fluidisé (1, 2, 30) monté avant celui-ci, **caractérisée en ce que** l'installation est connectée, par des conduites, à au moins un brûleur (25, 38) avec une conduite d'amenée (28) pour le gaz de refroidissement et l'oxygène et/ou l'air pour la combustion du gaz de refroidissement conjointement avec l'oxygène et/ou l'air, le brûleur (25) étant prévu avec sa chambre de combustion (25a) directement dans la conduite d'amenée de gaz réducteur (12) ou la conduite de gaz réducteur (13), ou le brûleur (25) présentant une chambre de combustion (25a) séparée de la conduite d'amenée de gaz réducteur (12) ou de la conduite de gaz réducteur (13), qui est connectée par des conduites à la conduite d'amenée de gaz réducteur (12) ou à la conduite de gaz réducteur (13), ou le brûleur (38) étant disposé dans un réacteur à lit fluidisé (30) et ce soit en dessous du lit fluidisé (35) à la hauteur du lit fluidisé (35), soit au-dessus du lit fluidisé (35), la conduite d'amenée (28) du brûleur (25, 38) pour le gaz de refroidissement partant de la conduite de retour de gaz (22) pour le gaz de refroidissement.

9. Installation pour la mise en oeuvre du procédé selon l'une quelconque des revendications 4 à 6, comprenant au moins deux réacteurs à lit fluidisé montés l'un derrière l'autre en série, pour la réduction au gaz de minerais particulaires contenant des oxydes au moyen d'un gaz réducteur contenant du CO et du H₂ obtenu à partir de charbon, avec une conduite d'amenée de gaz réducteur (12) au réacteur à lit fluidisé (3, 30) disposé en dernier dans la direction d'écoulement de la matière contenant des oxydes, avec une conduite d'évacuation (14) évacuant le gaz réducteur consommé sous forme de gaz de dégagement hors du réacteur à lit fluidisé (1, 30) disposé en premier dans la direction d'écoulement de la matière contenant des oxydes, une conduite de retour de gaz (22) pour le gaz de refroidissement, partant de la conduite d'amenée de gaz réducteur (12), et débouchant à nouveau dans la conduite d'amenée de gaz réducteur (12) par le biais d'un épurateur (23), et avec une conduite de gaz réducteur (13) prévue pour guider le gaz réducteur depuis un réacteur à lit fluidisé (3, 30) dans le réacteur à lit fluidisé (1, 2, 30) monté avant celui-ci, **caractérisée en ce que** chaque réacteur à lit fluidisé (1, 2, 3, 30) est connecté à un brûleur propre (25, 38) avec une conduite d'amenée (39) pour le gaz comburant externe et/ou le combustible solide et/ou liquide et l'oxygène et/ou l'air pour la combustion du gaz comburant externe et/ou du combustible solide ou liquide conjointement avec l'oxygène et/ou l'air, le brûleur (25) étant prévu avec sa chambre de combustion (25a) directement dans la conduite d'amenée de gaz réducteur (12) ou la conduite de gaz réducteur (13), ou le brûleur (25) présentant une chambre de combustion (25a) séparée de la conduite d'amenée de gaz réducteur (12) ou de la conduite de gaz réducteur (13), qui est connectée par des conduites à la conduite d'amenée de gaz réducteur (12) ou à la conduite de gaz réducteur (13), ou le brûleur (38) étant disposé dans un réacteur à lit fluidisé (30) et ce soit en dessous du lit fluidisé (35) à la hauteur du lit fluidisé (35), soit au-dessus du lit fluidisé (35).

10. Installation selon la revendication 7, 8 ou 9, **caractérisée en ce qu'**un épurateur (15) est prévu dans la conduite d'évacuation de gaz de dégagement (14), et du gaz de dégagement épuré peut être acheminé par le biais d'une conduite de gaz de dégagement (26) au brûleur (25). (Figures 2, 4).
